# EUROPÄISCHE PATENTSCHRIFT

(11) **EP 2 001 661 B1**
(45) Veröffentlichungstag und Bekanntmachung des Hinweises auf die Patenterteilung: **23.05.2012**
(21) Anmeldenummer: 07724237.8
(22) Anmeldetag: 13.04.2007
(51) Int. Cl.: B29D 30/30, B29D 30/16

(54) **Vorrichtung und Verfahren zum Aufbau eines Reifens**
Device and method for building a tyre
Dispositif et procede pour construire un pneu

(30) Priorität: 13.04.2006 DE 102006017882
(43) Veröffentlichungstag der Anmeldung: 17.12.2008
(73) Patentinhaber: Texmag GmbH Vertriebsgesellschaft, 8800 Thalwil (CH)
(72) Erfinder: BOBINGER, Herbert, 86161 Augsburg (DE); GRIMM, Thomas, 86163 Augsburg (DE)
(74) Vertreter: Witzany, Manfred
(86) Internationale Anmeldenummer: PCT/EP2007/003298
(87) Internationale Veröffentlichungsnummer: WO 2007/118688

(56) Entgegenhaltungen:
- EP-A- 0 393 284
- EP-A- 0 515 227
- EP-A1- 0 649 730
- JP-A- 3 147 835
- US-A- 5 194 107

## Beschreibung

Die Erfindung betrifft ein Verfahren zum Aufbau eines Reifens gemäß dem Oberbegriff des Patentanspruchs 1 sowie eine Reifenaufbaumaschine gemäß dem Oberbegriff des Patentanspruchs 5.

Aus der EP 0 776 757 B1 ist eine Reifenaufbaumaschine bekannt, die eine Trommel aufweist, auf die verschiedene Materialstücke aufgewickelt werden. Die einzelnen Materialstücke werden der Trommel mittels Fördereinrichtungen zugeführt, die von einer Vielzahl hintereinander angeordneten Rollen gebildet sind. Diese Rollen sind seitlich bewegbar, um eine seitliche Führung der Materialstücke zu realisieren. Diese Reifenaufbaumaschine hat sich in der Praxis gut bewährt und bildet den Ausgangspunkt der vorliegenden Erfindung.

Aus der EP-A-0 393 284 ist eine weitere Reifenaufbaumaschine bekannt, die eine Trommel aufweist, auf die verschiedene Materialstücke aufgewickelt werden. Die einzelnen Materialstücke werden mittels Förderbändern der Trommel zugeführt. Oberseitig greifen an den Materialstücken an beiden Stirnflächen Rollen an, deren Lage von einem Regler verändert wird. Diese Rollen sind in der Lage, die Materialstücke parallel zur Trommelachse zu verschieben, um auf diese Weise eine Ausrichtung der Materialstücke zueinander zu erzielen.

Aus der US-A-5 194 107 ist eine weitere Reifenaufbaumaschine bekannt, die eine Trommel und Förderbänder aufweist. Die Förderbänder werden dabei von einem Wegregler angesteuert, um die Materialstücke korrekt übereinander zu positionieren.

Aus der JP 03 147835 A ist ein Zentralregler einer Reifenaufbaumaschine bekannt. Dabei stehen mehrere Sequenzer, die verschiedene Arbeitsabläufe des Reifenaufbaus steuern, über ein Netzwerk mit einem zentralen Computer in Verbindung. Dieser Zentralcomputer verarbeitet die Daten der einzelnen Sequenzer und steuert diese wiederum an.

Aus der EP-A-0 515 227 ist eine Reifenaufbaumaschine bekannt, welche eine Trommel und Zuführeinheiten für Materialstücke aufweist. Dabei werden die einzelnen Materialsücke von einer langen Bahn abgeschnitten und deren Lange durch Messen der Positionen ihres Anfangs und ihres Endos ermittelt. Durch Vergleich mit den entsprechenden Sollängen wird ein Längenfehler ermittelt, der dann durch Veränderung der Lage der Schneideinrichtung geregelt wird.

Aus der EP-A-1 0 649 730 ist eine weitere Reifenaufbaumaschine bekannt. Dabei wird die Form der Materialstücke erfaßt und mit einer Referenzform verglichen. In Abhängigkeit vom Vergleichsergebnis wird dann der Schneidvorgang durch Regeln angepaßt.

Der Erfindung liegt die Aufgabe zugrunde, eine Reifenaufbaumaschine sowie ein Verfahren zu deren Betrieb zu schaffen, die sich durch eine verbesserte Qualität der damit erzeugten Reifen auszeichnet.

Diese Aufgabe wird erfindungsgemäß mit den Maßnahmen des Patentanspruchs 1 sowie mit den Merkmalen des Patentanspruchs 5 gelöst.

Bei dem Verfahren gemäß Anspruch 1 werden Materialstreifen von Förderern einer Trommel zugeführt und auf diese aufgebracht. Auf diese Weise können gleiche und/oder unterschiedliche Materialstreifen übereinander geschichtet werden, um den gewünschten Reifen aufzubauen. Beispielsweise können die einzelnen Materialstreifen aus Gummi bestehen, wobei gegebenenfalls unterschiedliche Gummimischungen eingesetzt werden. Andere Materialstreifen bestehen in der Regel aus Stahlgeflechten, um dem fertigen Reifen die nötige Festigkeit zu verleihen. Zusätzlich können Materialstreifen aus textilen Geweben bestehen, die ebenfalls der Materialverfestigung und damit einer hohen Lebensdauer des Reifens dienen. Diese einzelnen Materialstreifen werden nacheinander auf die Trommel aufgebracht, so daß sie sich radial übereinander schichten. Auf diese Weise ergibt sich der gewünschte Reifenaufbau. Zur Erzielung eines hohen Produktionsdurchsatzes können auch mehrere Trommeln vorgesehen sein, die abwechselnd mit den Materialstreifen beschickt werden. Grundsätzlich ist jedoch eine einzige Reifenaufbautrommel ausreichend. Die Materialstreifen werden mittels Förderern der Trommel zugeführt, die in unterschiedlicher Weise realisiert werden können. Beispielsweise können die Förderer von einzelnen Rollen oder von Förderbändern realisiert sein. Die Materialstreifen werden durch den Förderer quer zu ihrer Laufrichtung durch eine Lageregelung geführt, so daß sie lagerichtig auf die Trommel zulaufen müßten. Die Lageregelung wirkt dabei in einer beliebigen Richtung, die mit der Laufrichtung des Materialstreifens einen spitzen oder rechten Winkel einschließt. Sie kann eine seitliche Verschiebung oder Verschwenkung des Materialstreifens oder eine Kombination beider Bewegungen bewirken. In der Praxis hat sich jedoch herausgestellt, daß durch Maschinenfehler sowie Ungenauigkeiten bei der Übergabe der Materialstreifen auf die Trommel Lagefehler entstehen, so daß die einzelnen Materialstreifen nicht mehr korrekt aufeinander ausgerichtet sind. Im Idealfall sollte die Längsmittellinie aller Materialstreifen deckungsgleich übereinander liegen. Jede Abweichung von dieser Ideallage führt zu einer Beeinträchtigung der Laufruhe bzw. der Qualität des erstellten Reifens. Um die Positionierung der einzelnen Materialstreifen übereinander zu verbessern, wird die Lage der Materialstreifen auf der Trommel quer zur Laufrichtung, also im wesentlichen in axialer Richtung zur Trommel erfaßt und mit einem Sollwert verglichen. Dieses Vergleichsergebnis liefert einen direkten Wert des Ausrichtungsfehlers zwischen den Materialstreifen einerseits und der Trommel andererseits. Dieses Vergleichsergebnis wird in die Lageregelung der Förderer eingekoppelt, so daß auf diese Weise der gemessene Fehler beim nächsten Fördertakt berücksichtigt und entsprechend verringert wird. Vorzugsweise wird der Sollwert der Lageregelung um den genannten Fehler oder einen Bruchteil davon korrigiert. Nach wenigen Produktionstakten führt dieses Verfahren zu einer Lagegenauigkeit der übereinander liegenden Materialstreifen, die sämtliche Maschinen- und Übergabefehler in ausreichendem Maß ausgleicht. Ein auf diese Weise hergestellter Reifen hat demnach einen sehr präzisen Aufbau und zeichnet sich durch eine hohe Laufruhe und gleichzeitig hohe Qualität aus.

Da das Signal für die Lage des Materialstreifens auf der Trommel erst beim nächsten Takt des Förderers benötigt wird, wird die Lage des Materialstreifens, das Vergleichsergebnis bzw. das Ausgangssignal des Reglers gespeichert. Das gespeicherte Signal wirkt dabei frühestens beim Zuführen des nächsten Materialstreifens auf die Lageregelung des Förderers ein. Auf diese Weise werden zumindest Stellungsfehler der Trommel ausgeglichen. Um auch Übergabefehler und Fehler des Förderers auszugleichen, wirkt das gespeicherte Signal erst beim nächsten Fördertakt des selben Förderers auf diesen ein. Es ist auch daran gedacht, das Signal so lange zu speichern, bis der gleiche Arbeitsschritt beim nächsten Reifen fällig wird. Dabei wird für jeden Förderer mindestens ein Signal gespeichert wird. Dabei wirken nur Signale auf die Lageregelung des Förderers ein, die von Materialstreifen stammen, welche vom selben Förderer gefördert wurden. Auf diese Weise werden die Fehler jedes Förderers individuell ausgeregelt, ohne sich gegenseitig zu beeinflussen. Sind mehrere Trommeln vorgesehen, so wird vorzugsweise für jede Kombination bestehend aus Trommel und Förderer mindestens ein Signal gespeichert, um die Auswirkung der Trommel zu korrigieren.

Gemäß Anspruch 2 ist es günstig, wenn das Vergleichsergebnis zunächst einem Regler zugeführt wird, dessen Ausgangssignal in die Lageregelung des Förderers eingekoppelt wird. Damit läßt sich das Verhalten der Lageregelung optimal beeinflussen. Durch Wahl einer geeigneten Regelverstärkung kann jeder Lagefehler des Materialstreifens auf der Trommel praktisch vollständig ausgeglichen werden. Durch die Regelung wird der Sollwert der Lageregelung des Förderers Takt für Takt angepaßt, um vorhandene Fehler optimal auszugleichen.

Als Regelverfahren haben sich gemäß Anspruch 3 ein P-, PI- oder PID-Verhalten bewährt. Im einfachsten Fall wird eine reine Proportionalregelung eingesetzt, die in der Regel bereits ein ausreichend gutes Regelergebnis liefert. Vorzugsweise ist der Proportionalitätsfaktor des P-Reglers etwas kleiner als 1, um Schwingungen des Regelsystems vorzubeugen. In der Praxis haben sich Proportionalitätswerte von etwa 0,3 bis 0,8 bewährt. Zur Erzielung einer besseren Ausregelung des vorhandenen Maschinenfehlers, ohne Schwingungsprobleme zu erzeugen, hat sich die Hinzufügung eines Integral-Anteils im Regelverhalten bewährt, so daß ein PI-Regler entsteht. In besonders schwierigen Regelsituationen kann auch ein Differential-Anteil hinzugenommen werden, wodurch sich insgesamt ein PID-Verhalten ergibt.

Da das Regelungsverfahren maschinentaktabhängig ist, ist es gemäß Anspruch 4 vorteilhaft, wenn der Regler digital realisiert ist, wobei der Takt des Förderers als Zeittakt des Reglers eingesetzt wird. Bei einem digitalen Regler wird das Regelverhalten grundsätzlich in vergleichbarer Weise wie bei einem analogen Regler realisiert. Zeitabhängige Stufen wie Integratoren und Differentiatoren werden allerdings durch Speicherung früherer Werte und Anwendung mathematischer Funktionen auf diese gespeicherten Informationen realisiert. Diese mathematischen Operationen laufen normalerweise nach einem festen Zeittakt ab. Im vorliegenden Fall ist es jedoch günstiger, den Maschinentakt des Förderers als Zeittakt zu nutzen. Für die Regelung spielt es keine Rolle, wie lange ein bestimmter Förderer zum Transport eines Materialstreifens benötigt. Wichtig ist lediglich, daß die gewonnene Korrekturinformation zur Verfügung steht, wenn derselbe Förderer das nächste Materialstück zur Trommel fördert. Dies wird durch den Einsatz des Maschinentaktes des Förderers als Zeittakt des Reglers in einfachster Weise realisiert. Soll der Regler beispielsweise ein integrales Verhalten realisieren, so multipliziert er einfach das Eingangssignal mit einer vorgegebenen Konstanten und addiert das Produkt zum Ausgabewert, der beim letzten Maschinentakt des gleichen Förderers ermittelt wurde.

Eine Reifenaufbaumaschine gemäß Anspruch 5 besteht aus einer drehbaren Trommel, auf der Materialstreifen aufbringbar sind. Die Materialstreifen werden dabei am Außenumfang der Trommel aufgelegt, so daß sich ein gewünschter Schichtaufbau zur Bildung des Reifens ergibt. Die einzelnen Materialstreifen bestehen vorzugsweise aus Gummi, Stahlgeflechten bzw. Geweben. Die Materialstreifen werden mittels Förderern transportiert, die vorzugsweise von Walzenbahnen bzw. Förderbändern realisiert werden. Dem Förderer ist wenigstens ein erster Sensor zugeordnet, der den Lauf der Materialstücke quer zur Laufrichtung erfaßt. Dieser Sensor kann eine Mittenmarkierung der Materialstücke erfassen. Alternativ ist auch daran gedacht die Randkante der Materialstücke zu dedektieren. Bei bekannter Breite der Materialstücke ist damit der Bahnlauf eindeutig bestimmt. Außerdem ist daran gedacht, wenigstens zwei Sensoren vorzusehen, die beide Randkanten der Materialstreifen erfassen. Auf diese Weise ist eine breitenunabhängige Mittenerfassung der Materialstreifen möglich. Die Förderer weisen außerdem eine Lageregelung für die Materialstreifen auf, durch die die Materialstücke quer zur Bahnlaufrichtung ausgerichtet werden. Im einfachsten Fall wird das Förderband bzw. werden die Rollen quer zur Laufrichtung der Materialstreifen verschoben, um die gewünschte Ausrichtung der Materialstreifen zu erzielen. Zum Ausgleich von Positionsfehlern der Trommel sowie Übergabefehlern der Materialstreifen auf die Trommel ist im Bereich der Trommel mindestens ein zweiter Sensor vorgesehen. Dieser zweite Sensor erfaßt die Lage des Materialstreifens quer zur Laufrichtung und ermöglicht somit eine Bestimmung des Positionsfehlers der Materialstreifen auf der Trommel. Um die auf diese Weise ermittelten Lageschwankungen der Materialstreifen auf der Trommel bei künftigen Produktionsschritten zu reduzieren, steht der trommelseitige Sensor über Speichermittel mit der Lageregelvorrichtung der Förderer in Wirkverbindung. Damit kann Schritt für Schritt der Lagefehler der einzelnen Materialstreifen auf der Trommel durch eine entsprechende Sollwertverlagerung der Förderer reduziert werden. Diese Reifenaufbaumaschine ist damit in der Lage, einzelne Materialstreifen sehr präzise übereinander anzuordnen und reagiert auch selbsttätig auf sich verändernde Randbedingungen, welche die Positionierung der einzelnen Materialstreifen auf der Trommel beeinflussen können.

Der trommelseitige Sensor erfaßt die Lage aller Materialstreifen auf der Trommel nacheinander, unabhängig davon, von welchem Förderer diese der Trommel zugeführt wurden. Um sicherzustellen, daß die auf diese Weise erzielten Meßergebnisse der Lageregelung des jeweils eingesetzten Förderers zugeordnet werden, steht der trommelseitige Sensor mit einem Multiplexer in Wirkverbindung. Dieser Multiplexer führt die gewonnenen Signale jeweils jenen Speichermitteln zu, die jenem Förderer zugeordnet sind, der zuletzt seinen Materialstreifen zur Trommel gefördert hat. Ist der gleiche Förderer das nächste Mal an der Reihe, so kann dieser auf die Korrekturdaten zurückgreifen, die bei der letzten Materialförderung ermittelt wurden.

Gemäß Anspruch 6 ist es vorteilhaft, wenn der mindestens eine erste und/oder zweite Sensor eine Längsrandkante und/oder eine Markierung des Materialstreifens erfaßt. In beiden Fällen ergibt sich eine präzise Lageerfassung des Materialstreifens. Die Erfassung der Randkante hat den Vorteil, daß diese sehr einfach durchführbar ist, und insbesondere die Materialstreifen nicht vorher präpariert werden müssen. Der damit verbundene Nachteil der Breitenabhängigkeit der Messung kann durch Einsatz zweier Sensoren ausgeglichen werden, die somit beide Randkanten erfassen können. Ist der Materialstreifen ohnehin mit einer abtastbaren Markierung versehen, so wird vorzugsweise diese vom Sensor abgetastet.

Da die gewonnenen Korrekturinformationen erst beim nächsten Takt desselben Förderers benötigt werden, ist es gemäß Anspruch 7 vorteilhaft, wenn die Speichermittel vom Fördertakt des Förderers beeinflußt sind, so daß sie taktgenau beschrieben und ausgelesen werden.

Zur Erzielung eines möglichst präzisen Ausgleichs der maschinenbedingten Lagefehler der einzelnen Materialstreifen ist es gemäß Anspruch 8 günstig, wenn der trommelseitige Sensor mit mindestens einem digitalen Regler in Wirkverbindung steht. Ein digitaler Regler hat gegenüber einem analogen Regler den Vorteil, daß lange Integrationszeiten problemlos und insbesondere ohne Drift realisierbar sind. Außerdem kann der bei digitalen Reglern erforderliche Zeittakt beliebig eingestellt werden, so daß die Regelung durch Wahl eines geeigneten Zeittaktes an unterschiedliche Reifenaufbauzeiten problemlos einstellbar ist. Der Zeittakt wird vom Takt der Reifenaufbaumaschine selbst abgeleitet, so daß auf diese Weise die eingestellten Regelparameter unabhängig von der Reifenaufbauzeit sind. Insbesondere spielt es auch keine Rolle, ob einzelne Schritte des Reifenaufbaus unterschiedlich lange dauern oder ob der gesamte Herstellungsprozeß aus irgendwelchen Gründen unterbrochen werden muß. In diesen Fällen wird die Zeiteinheit, mit der der Regler arbeitet, gestaucht, gedehnt oder vollständig angehalten, ohne daß dies auf die Reglerparameter irgendwelche Auswirkungen hätte. Der Zeittakt des digitalen Reglers ist vom Takt des Förderers abgeleitet. Zwischen zwei Fördertakten benötigt der Förderer bzw. dessen Regler keinerlei Informationen und er gibt in dieser Zeit auch keine neuen Informationen aus. Ein kürzerer Takt wäre daher zwecklos. Eine Verlängerung des Taktes über mehrere Takte des Förderers würde dagegen nur die Regelzeit des Reglers verlängern und führt dadurch zu schlechteren Ergebnissen.

Der Erfindungsgegenstand wird beispielhaft anhand der Zeichnung erläutert, ohne den Schutzumfang zu beschränken.

Es zeigt:
- Figur 1: eine schematische, räumliche Darstellung einer Reifenaufbaumaschine und
- Figur 2: eine schematische, elektronische Schaltung für die Reifenaufbaumaschine gemäß Figur 1.

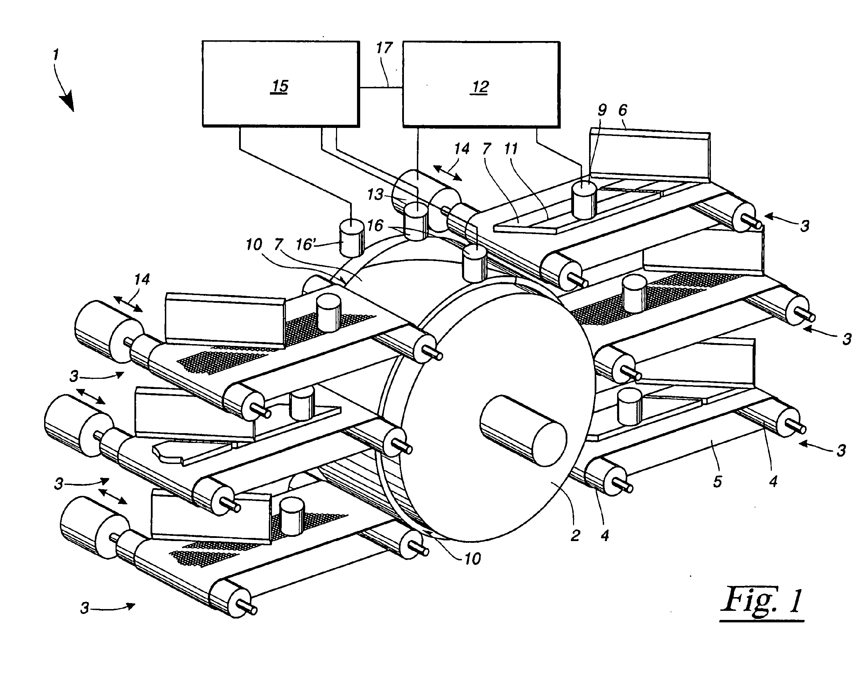

Eine Reifenaufbaumaschine 1 gemäß Figur 1 weist eine Trommel 2 auf, die drehbar gelagert ist. Der Trommel 2 sind Förderer 3 zugeordnet, die im wesentlichen von zwei drehbar gelagerten Umlenkwalzen 4 und einem Förderband 5 gebildet sind. Die Umlenkwalzen 4 sind bombiert ausgebildet, so daß sie in der Mitte einen etwas größeren Durchmesser als an den Enden aufweisen. Diese besondere Formgebung der Umlenkwalzen 4 führt zu einer günstigen selbsttätigen Laufregelung des Förderbandes 5, so daß sich dieses selbst an den Umlenkwalzen 4 zentriert. Damit entfallen Regelungsmaßnahmen, um den Lauf des Förderbandes 5 zu stabilisieren.

Dem Förderer 3 ist außerdem ein Messer 6 zugeordnet, welches einen vom Förderband 5 transportierten Materialstreifen 7 schräg zuschneidet. Der Materialstreifen 7 wird durch das Messer 6 derart abgelängt, daß der Materialstreifen 7 exakt auf die Trommel 2 bzw. die dort bereits abgelegten Materialstreifen 7 paßt. Durch den schrägen Schnitt wird außerdem sichergestellt, daß der fertige Reifen an der Schnittstelle keine Schwachstelle aufweist.

Die einzelnen Förderer 3 transportieren die Materialstreifen 7 zur Trommel 2, die sich bei jedem Fördertakt mindestens einmal um ihre Achse 8 herumdreht. Auf diese Weise werden die einzelnen Materialstreifen 7 übereinander geschichtet, so daß sich insgesamt der gewünschte Schichtaufbau des Reifens ergibt. Damit die Materialstreifen 7 auf der Trommel 2 möglichst exakt übereinander liegen, weist jeder Förderer 3 mindestens einen Sensor 9 auf, der eine Längsrandkante 10 des Materialstreifens 7 erfaßt. Der Sensor 9 arbeitet vorzugsweise optisch und damit berührungslos. Alternativ könnte der Sensor 9 auch mit Ultraschallwellen oder mechanisch tastend ausgebildet sein. Der Sensor 9 könnte außerdem eine aufgedruckte Markierung 11 des Materialstreifens 7 erfassen.

Jeder Sensor 9 steht mit einer eigenen Lageregelvorrichtung 12 in Wirkverbindung, welche das vom Sensor 9 erzeugt Signal als Ist-Wert entgegennimmt. Der Übersichtlichkeit wegen wurde nur eine Lageregelvorrichtung 12 dargestellt. Die Lageregelvorrichtung 12 wirkt auf einen Motor 13 ein, der die Umlenkwalzen 4 in Pfeilrichtung 14 in Abhängigkeit vom Ausgangssignal der Lageregelvorrichtung 12 verschiebt. Damit wird der Materialstreifen 7 positioniert.

Um auch Fehler bezüglich der Positionierung der Trommel 2 sowie Fehler bei der Übergabe der Materialstreifen 7 vom Förderer 3 auf die Trommel 2 zu korrigieren, ist eine weitere Regelvorrichtung 15 vorgesehen. Diese wird von zwei weiteren, der Trommel 2 zugeordneten Sensoren 16 beeinflußt. Die Sensoren 16 können in gleicher Weise wie der Sensor 9 realisiert sein. Die Sensoren 16 erfassen beide Randkanten 10 des Materialstreifens 7. Auf diese Weises kann eine von der Breite des Materialstreifens 7 unabhängige Erfassung der Mittellinie des Materialstreifens 7 realisiert werden. Alternativ ist es möglich, nur einen Sensor 16 einzusetzen, der nur eine der Längsrandkanten 10 des Materialstreifens 7 erfaßt.

Außerdem ist der Trommel 2 ein weiterer Sensor 16' zugeordnet, der eine Randkante der Trommel 2 erfaßt. Dieser Sensor 16' liefert ein Referenzsignal, das es gestattet, die Signale der Sensoren 16 in auf die Trommel 2 bezogene Relativwerte umzurechnen. Dies erlaubt die Korrektur von Lagefehlern der Materialstreifen 7, die von einer Fehlpositionierung der Trommel 2 herrühren.

Der Sensor 16 ermittelt die relative Lage des Materialstreifens 7 auf der Trommel 2, so daß sämtliche Maschinen- und Übergabefehler berücksichtigt sind. Dieser Fehler beeinflußt die Regelvorrichtung 15, die hieraus ein Ausgangssignal berechnet. Das Ausgangssignal der Regelvorrichtung 15 steht über eine Leitung 17 mit der Lageregelvorrichtung 12 in des Förderers 3 in Wirkverbindung. Es verändert dabei den Sollwert der Lageregelvorrichtung 12, so daß beim nächsten aufzubauenden Reifen der Sollwert der Lageregelvorrichtung 12 in Abhängigkeit vom gemessenen Fehler verändert ist. Die Änderung erfolgt dabei in der Weise, daß wenigstens nach einigen aufgebauten Reifen der Materialstreifen 7 derart versetzt zur Trommel 2 zugeführt wird, daß auf diese Weise der maschinen- und übergabebedingte Fehler korrigiert wird.

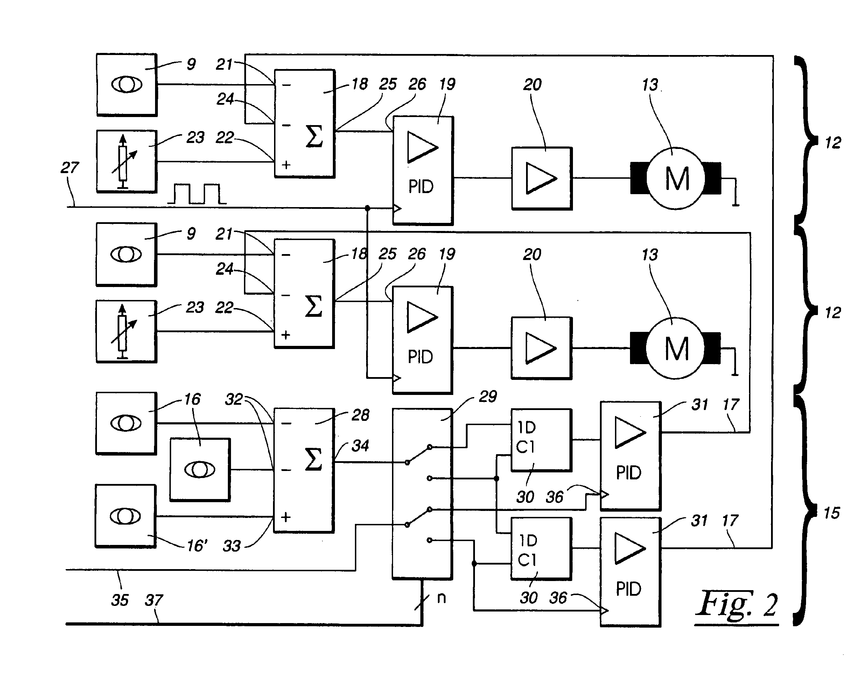

Die Figur 2 zeigt eine schematische Schaltung für die Reifenaufbaumaschine 1 gemäß Figur 1. In der obersten Zeile ist die Schaltung der Lageregelvorrichtung 12 eines der Föderer 3 dargestellt. Die Lageregelvorrichtung 12 besteht im wesentlichen aus einem Summierer 18, einem Regelverstärker 19 und einem Leistungsverstärker 20. Der Summmierer 18 weist einen invertierenden Eingang 21 auf, der mit dem Sensor 9 verbunden ist. Der Sensor 9 liefert dabei den Ist-Wert für die Lageregelvorrichtung 12. Ein nicht invertierender Eingang 22 des Summierers 18 ist mit einem Sollwertgeber 23 verbunden, der den Sollwert für die Lage des Materialstreifens 7 vorgibt. Der Sollwertgeber 23 ist in der Regel einstellbar. Insbesondere ist daran gedacht, den Sollwertgeber 23 in Form einer Recheneinheit auszubilden, die die korrekte, gewünschte Kantenlage des Materialstreifens 7 aus dessen Breite bestimmt. Schließlich weist der Summierer 18 einen weiteren invertierenden Eingang 24 auf, dessen Funktion später erläutert wird.

Ein Ausgang 25 des Summierers 18 steht mit einem Eingang 26 des Regelverstärkers 19 in Wirkverbindung. Der Regelverstärker 19 besitzt ein PID-Verhalten und hat damit einen Proportional-, Integral- und einen Differentialanteil. Die Verstärkungsfaktoren der einzelnen Anteile können beliebig eingestellt werden. Der Regelverstärker 19 ist in Form eines Digitalverstärkers realisiert, wobei eine Taktleitung 27 das Zeitsignal des Regelverstärkers 19 bildet. Dieses Zeitsignal ist periodisch, wobei die Frequenz an die konkreten Bedürfnisse der Regelung angepaßt werden kann.

Der Regelverstärker 19 steht ausgangsseitig mit dem Leistungsverstärker 20 in Wirkverbindung, der das berechnete Regelsignal auf eine ausreichende Leistung verstärkt, um damit den Motor 13 des Förderers 3 ansteuern zu können.

In der zweiten Zeile ist eine weitere Lageregelvorrichtung 12 eines weiteren Förderers 3 dargestellt. Der Aufbau dieser zweiten Lageregelvorrichtung 12 ist identisch zur erstgenannten, so daß von einer detaillierten Beschreibung dieser weiteren Lageregelvorrichtung abgesehen wird. Im praktischen Einsatz ist für jeden Förderer 3 eine eigene Lageregelvorrichtung 12 vorgesehen. Zur besseren Übersichtlichkeit sind jedoch in Figur 2 nur zwei der Lageregelvorrichtungen 12 dargestellt.

In der dritten Zeile ist die Regelvorrichtung 15 dargestellt. Diese besteht aus einem Summierer 28, einem Multiplexer 29, Speichermitteln 30 sowie Regelverstärkern 31.

Der Summierer 28 weist zwei invertierende Eingänge 32 auf, die mit den trommelseitigen Sensoren 16 verbunden sind. Auf diese Weise wird das Summensignal beider trommelseitigen Sensoren berechnet, das dem Mittelwert proportional ist und damit die Lage der Mittellinie des Materialstreifens 7 repräsentiert. Der Summierer 28 weist außerdem einen nicht invertierenden Eingang 33 auf, der mit dem Sensor 16' verbunden ist, der die Endkante der Trommel 2 erfaßt. Da die Signale der Sensoren 16 einerseits und 16' andererseits durch den Summierer 28 voneinander abgezogen werden, liefert der Summierer 28 an seinem Ausgang 34 ein Signal, welches proportional zur Lage der Mittellinie des Materialstreifens 7 relativ zur Trommel 2 ist. Dieses Signal gibt daher den exakten Positionierfehler des Materialstreifens 7 wieder.

Ein Ausgang 34 des Summierers 28 steht mit dem Multiplexer 29 in Wirkverbindung, der dieses Signal in Abhängigkeit von einer Adresse 35 den Speichermitteln 30 zuführt. Die Adresse 35 gibt dabei den zur Zeit aktiven Förderer 3 an. Die Speichermittel 30 speichern demnach für jeden Förderer 3 getrennt den aktuellen Versatz des Materialstreifens 7 relativ zur Trommel 2.

Die Speichermittel 30 sind jeweils mit dem Regelverstärker 31 verbunden, der in gleicher Weise wie der Regelverstärker 19 ausgebildet sein kann. Der wesentliche Unterschied zum Regelverstärker 19 ist jedoch die Tatsache, daß die Regelverstärker 31 kein echtes Zeitsignal als Taktsignal erhalten. Statt dessen sind Takteingänge 36 und Regelverstärker 31 mit dem Multiplexer 29 verbunden, der zusammen mit dem Ausgangssignal des Summierers 28 auch ein Maschinentaktsignal 37 umschaltet. Dieses Maschinentaktsignal 37 liefert bei jedem Arbeitstakt des Förderers 3 eine aktive Taktflanke. Damit werden die zeitabhängigen I- bzw. D-Anteile des Regelverstärkers 19 in Wirklichkeit in Abhängigkeit von den Arbeitstakten des Förderers 3 berechnet.

Die Regelverstärker 31 stehen ausgangsseitig über die Leitungen 17 mit den Eingängen 24 der Summierer 18 in Wirkverbindung. Damit können die Regelverstärker 31 auf die Lageregelvorrichtungen 12 derart einwirken, daß der gemessene Versatz der Materialstreifen 7 auf der Trommel 2 von Reifen zu Reifen allmählich korrigiert wird. Nach einer verhältnismäßig geringen Anzahl von produzierten Reifen ergibt sich somit eine sehr präzise Ausrichtung der Materialstreifen 7 relativ zur Trommel 2. In einfachen Anwendungsfällen kann der Regelverstärker 31 auch entfallen. Die Speichermittel 30 wirken dann direkt auf die Summierer 18 ein.

### Bezugszeichenliste

- 1: Reifenaufbaumaschine
- 2: Trommel
- 3: Förderer
- 4: Umlenkwalze
- 5: Förderband
- 6: Messer
- 7: Materialstreifen
- 8: Achse
- 9: erster Sensor
- 10: Längsrandkante
- 11: Markierung
- 12: Lageregelvorrichtung
- 13: Motor
- 14: Korrekturvorrichtung
- 15: Regelvorrichtung
- 16: zweiter Sensor
- 16': dritter Sensor
- 17: Leitung
- 18: Summierer
- 19: Regelverstärker
- 20: Leistungsverstärker,
- 21: invertierender Eingang
- 22: nicht invertierender Eingang
- 23: Sollwertgeber
- 24: invertierender Eingang
- 25: Ausgang
- 26: Eingang
- 27: Taktleitung
- 28: Summierer
- 29: Multiplexer
- 30: Speichermittel
- 31: Regelverstärker
- 32: invertierender Eingang
- 33: nicht invertierender Eingang
- 34: Ausgang
- 35: Adresse
- 36: Takteingang
- 37: Maschinentaktsignal

## Patentansprüche

1. Verfahren zum Aufbau eines Reifens, bei dem Materialstreifen (7) von Förderern (3) mindestens einer Trommel (2) zugeführt und quer zu ihrer Laufrichtung durch eine Lageregelung geführt werden, um anschließend auf die Trommel (2) aufgebracht zu werden, wobei die Lage der Materialstreifen (7) auf der Trommel (2) quer zur Laufrichtung erfaßt und mit einem Sollwert verglichen wird, und das Vergleichsergebnis in die Lageregelung von mindestens einem der Förderer (3) gekoppelt wird, **dadurch gekennzeichnet, daß** die Lage des Materialstreifens (7), das Vergleichsergebnis und/oder das Ausgangssignal eines Reglers (15) gespeichert wird, wobei das gespeicherte Signal frühestens beim nächsten Zuführen des Materialstreifens (7) durch denselben Förderer (3) auf dessen Lageregelung einwirkt.

2. Verfahren nach Anspruch 1, **dadurch gekennzeichnet, daß** das Vergleichsergebnis dem Regler (15) zugeführt wird, dessen Ausgangssignal in die Lageregelung gekoppelt wird.

3. Verfahren nach Anspruch 2, **dadurch gekennzeichnet, daß** der Regler (15) ein P-, PI- oder PID-Verhalten aufweist.

4. Verfahren nach Anspruch 3, **dadurch gekennzeichnet, daß** der Regler (15) digital realisiert wird, wobei der Takt des Förderers (3) als Zeittakt des Reglers (15) eingesetzt wird.

5. Reifenaufbaumaschine bestehend aus einer drehbaren Trommel (2), auf der Materialstreifen (7) aufbringbar sind, die zur Trommel (2) mittels Förderern (3) transportierbar sind, wobei der Lauf der Materialstreifen (7) quer zur Laufrichtung von mindestens einem ersten Sensor (9) erfaßt ist, der mit einer Lageregelvorrichtung in Wirkverbindung steht, wobei im Bereich der Trommel (2) mindestens ein zweiter, die Lage des Materialstreifens (7) quer zur Laufrichtung erfassender Sensor (16) vorgesehen ist, der mit der Lageregelvorrichtung (12) in Wirkverbindung steht, **dadurch gekennzeichnet, daß** der mindestens eine zweite Sensor (16) mit mindestens einem Multiplexer (29) in Wirkverbindung steht, der die Signale den Förderern (3) zugeordneten Speichermitteln (30) zuführt, deren gespeicherte Signale frühestens beim nächsten Zuführen des Materialstreifens (7) durch denselben Förderer (3) auf dessen Lageregelung einwirken.

6. Reifenaufbaumaschine nach Anspruch 5, **dadurch gekennzeichnet, daß** der mindestens eine erste Sensor (9) und/oder zweite Sensor (16) eine Längsrandkante (10) und/oder Markierung (11) des Materialstreifens (7) erfaßt.

7. Reifenaufbaumaschine nach Anspruch 5 oder 6, **dadurch gekennzeichnet, daß** die Speichermittel (30) vom Fördertakt (37) des Förderers (3) beeinflußt sind.

8. Reifenaufbaumaschine nach mindestens einem der Ansprüche 5 bis 7, **dadurch gekennzeichnet, daß** der mindestens eine zweite Sensor (16) mit mindestens einem digitalen Regler (31) in Wirkverbindung steht, dessen Zeittakt vom Takt (37) des Förderers (3) abgeleitet ist.

## Claims

1. Method for building a tyre, in which strips of material (7) are fed by conveyors (3) to at least one drum (2) and are led through a position control transversely in relation to their running direction, to be subsequently applied to the drum (2), the position of the strips of material (7) on the drum (2) transversely in relation to the running direction being sensed and compared with a setpoint value, and the result of the comparison being entered in the position control of at least one of the conveyors (3), **characterized in that** the position of the strip of material (7), the result of the comparison and/or the output signal of a controller (15) is/are stored, the stored signal being used at the earliest when the strip of material (7) is next fed in by the same conveyor (3) to influence the position control of the latter.

2. Method according to Claim 1, **characterized in that** the result of the comparison is fed to the controller (15), the output signal of which is entered in the position control.

3. Method according to Claim 2, **characterized in that** the controller (15) has P, PI or PID action.

4. Method according to Claim 3, **characterized in that** the controller (15) takes a digital form, the cycle of the conveyor (3) being used as the clock pulse of the controller (15).

5. Tyre building machine consisting of a rotatable drum (2), to which strips of material (7) that can be transported to the drum (2) by means of conveyors (3) can be applied, the run of the strips of material (7) transversely in relation to the running direction being sensed by at least one first sensor (9), which is in operative connection with a position controlling device, at least one second sensor (16), which senses the position of the strip of material (7) transversely in relation to the running direction and is in operative connection with the position controlling device (12), being provided in the region of the drum (2), **characterized in that** the at least one second sensor (16) is in operative connection with at least one multiplexer (29), which feeds the signals to storing means (30), which are assigned to the conveyors (3) and the stored signals of which are used at the earliest when the strip of material (7) is next fed in by the same conveyor (3) to influence the position control of the latter.

6. Tyre building machine according to Claim 5, **characterized in that** the at least one first sensor (9) and/or second sensor (16) senses a longitudinal peripheral edge (10) and/or marking (11) of the strip of material (7).

7. Tyre building machine according to Claim 5 or 6, **characterized in that** the storing means (30) are influenced by the conveying cycle (37) of the conveyor (3).

8. Tyre building machine according to at least one of Claims 5 to 7, **characterized in that** the at least one second sensor (16) is in operative connection with at least one digital controller (31), the clock pulse of which is derived from the cycle (37) of the conveyor (3).

## Revendications

1. Procédé de montage d'un bandage de roue, dans lequel des rubans (7) de matériau sont apportés à au moins un tambour (2) par des dispositifs de transport (3) et sont guidés transversalement par rapport à leur direction d'avancement par une régulation de position avant d'être appliqués sur le tambour (2),
la position des rubans (7) de matériau sur le tambour (2) dans la direction transversale par rapport à la direction d'avancement étant saisie et comparée à une valeur de consigne,
le résultat de la comparaison étant injecté dans la régulation de position d'au moins l'un des dispositifs de transport (3),
**caractérisé en ce que**
la position du ruban (7) de matériau, le résultat de la comparaison et/ou le signal de sortie d'un régulateur (15) sont conservés en mémoire, le signal conservé en mémoire agissant sur la régulation de position du dispositif de transport (3) au plus tôt lors de l'amenée du ruban suivant (7) de matériau par le même dispositif de transport.

2. Procédé selon la revendication 1, **caractérisé en ce que** le résultat de la comparaison est amené au régulateur (15) dont le signal de sortie est injecté dans la régulation de position.

3. Procédé selon la revendication 2, **caractérisé en ce que** le régulateur (15) présente un comportement P, PI ou PID.

4. Procédé selon la revendication 3, **caractérisé en ce que** le régulateur (15) est numérique, la cadence du dispositif de transport (3) étant utilisée comme cadence d'horloge du régulateur (15).

5. Machine de montage de bandages de roue constituée d'un tambour rotatif (2) sur lequel peuvent être appliqués des rubans (7) de matériau qui peuvent être transportés vers le tambour (2) au moyen de dispositifs de transport (3),
le déplacement des rubans (7) de matériau dans la direction transversale par rapport à la direction d'avancement étant saisi par au moins un premier détecteur (9) qui coopère avec un dispositif de régulation de position,
au moins un deuxième détecteur (16) qui saisit la position du ruban (7) de matériau dans la direction transversale par rapport à la direction d'avancement étant prévu au niveau du tambour (2) et coopérant avec le dispositif (12) de régulation de position, **caractérisée en ce que**
le ou les deuxièmes détecteurs (16) coopèrent avec au moins un multiplexeur (29) qui amène les signaux aux moyens de mémoire (30) associés aux dispositifs (3) de transport et dont les signaux conservés en mémoire agissent sur la régulation de position du dispositif de transport (3) au plus tôt lors de l'amenée du ruban suivant (7) de matériau par ce même dispositif de transport.

6. Machine de montage de bandages de roue selon la revendication 5, **caractérisée en ce que** le ou les premiers détecteurs (9) et/ou le ou les deuxièmes détecteurs (16) saisissent un champ longitudinal (10) et/ou un marquage (11) du ruban (7) de matériau.

7. Machine de montage de bandages de roue selon les revendications 5 ou 6, **caractérisée en ce que** la cadence de transport (37) du dispositif de transport (3) agit sur les moyens de mémoire (30).

8. Machine de montage de bandages de roue selon au moins l'une des revendications 5 à 7, **caractérisée en ce que** le ou les deuxièmes détecteurs (16) coopèrent avec au moins un régulateur numérique (31) dont la cadence d'horloge est dérivée de la cadence (37) du dispositif de transport (3).
